# EUROPÄISCHE PATENTANMELDUNG

(11) **EP 2 586 511 A1**
(43) Veröffentlichungstag der Anmeldung: **01.05.2013**
(21) Anmeldenummer: 12006494.4
(22) Anmeldetag: 17.09.2012
(51) Int. Cl.: B01D 29/01, B01D 35/06, B01D 29/56

(54) **Filteranordnung**

(30) Priorität: 28.10.2011 DE 102011117163
(71) Anmelder: IBS Filtran Kunststoff-/Metallerzeugnisse GmbH, 51597 Morsbach (DE)
(72) Erfinder: Dedering, Michael, 51597 Morsbach (DE)
(74) Vertreter: Polypatent

(57) **Zusammenfassung**

Filteranordnung zur Filtration von Öl oder einem ATF-Fluid, insbesondere Getriebeölfilter, umfassend wenigstens eine erste und eine zweite Filtrationslage (3, 5), die mittels wenigstens eines Abstandhalters auf Abstand zueinander in einem Filtergehäuse (2) so angeordnet sind, dass diese zwischen sich wenigstens eine Zwischenkammer (7) bilden, wobei zwischen der ersten und der zweiten Filtrationslage (3, 5) wenigstens ein Magnet oder eine Magnetanordnung zur Aushaltung von Eisenpartikeln aus dem Ölstrom vorgesehen sind.

## Beschreibung

Die Erfindung betrifft eine Filteranordnung zur Filtration von Öl, insbesondere einen Getriebeölfilter, umfassend wenigstens eine erste und eine zweite Filtrationslage, die mittels wenigstens eines Abstandshalters mit Abstand zueinander in einem gemeinsamen Filtergehäuse so angeordnet sind, dass diese zwischen sich wenigstens eine Zwischenkammer bilden.

Eine solche Filteranordnung ist beispielsweise aus der EP 2 133 130 A bekannt. Das aus der EP 2 133 130 bekannte Getriebeölfilter soll als Saugfilter geeignet sein. Dieses Filter ist als Filter nach dem sog. "partial flow"-Prinzip aufgebaut und umfasst eine erste Filtrationslage, die als offenes Grobfilter ausgebildet ist sowie eine zweite Filtrationslage, die als dichtes Feinfilter ausgebildet ist. Die Filtrationslagen sind voneinander beabstandet unter Zwischenlage eines Stützgitters angeordnet. Das Getriebeölfilter ist so aufgebaut und ausgelegt, dass das Öl zunächst die dichtere Filtrationslage durchströmt und anschließend in die zwischen den Filtrationslagen gebildeten Zwischenkammern eintritt und das Filtrationsmedium schließlich über die erste weniger dichte Filtrationslage verlässt. Um eine Durchströmbarkeit mit verhältnismäßig geringen Druckverlusten auch bei kaltem Öl zu gewährleisten, sind in der dichteren Filtrationslage Strömungsdurchlässe bzw. Strömungsbypässe angeordnet. Die gesamte Anordnung, umfassend zwei Filtrationslagen und das dazwischen angeordnete Rahmenelement ist üblicherweise in einem Filtergehäuse so angeordnet, dass der gesamte Ölstrom die Filteranordnung passiert.

Im Motorölkreislauf von Kfz, insbesondere in Getriebeölkreisläufen, sind nennenswerte Anteile an ferritischen Partikeln enthalten, die normalerweise mittels einer oder mehrerer Magnete aus dem Ölstrom ausgehalten werden. Die Magnete sind in einem die Filteranordnung umschließenden Filtergehäuse so angeordnet, dass diese von einem möglichst großen Anteil des Ölvolumenstroms umströmt werden.

Diese bekannte Magnetfilteranordnung ist mit dem Nachteil behaftet, dass die Magnete eine verhältnismäßig hohe magnetische Feldstärke aufweisen müssen, damit diese magnetisierbare Partikel auch bei einer starken Strömungsdynamik halten können. Hier kommt erschwerend hinzu, dass bei kaltem Getriebeöl und einer entsprechenden Viskosität des Öls die Magnete im Bereich der Umströmung hohen Scherkräften ausgesetzt sind, so dass hierdurch eine Abreinigung der Magnete erfolgen kann, mit der Folge, dass die ferritischen Partikel wieder in den Ölkreislauf gelangen.

Magnete mit einer entsprechend hohen Haftkraft / magnetischer Feldstärke sind teuer und beanspruchen im Ölfiltergehäuse verhältnismäßig viel Platz.

Der Erfindung liegt daher die Aufgabe zugrunde, eine Filteranordnung bzw. ein Motoröl- oder Getriebeölfilter der eingangs genannten Art diesbezüglich zu verbessern. Insbesondere soll eine wirksame und dauerhafte Aushaltung ferritischer Partikel aus dem Ölstrom in möglichst bauraumsparender Art und Weise möglich sein.

Die der Erfindung zugrunde liegende Aufgabe wird insbesondere gelöst durch eine Filteranordnung zur Filtration von Öl, insbesondere durch ein Getriebeölfilter, umfassend wenigstens eine erste und eine zweite Filtrationslage, die mittels wenigstens eines Abstandhalters mit Abstand zueinander in einem gemeinsamen Filtergehäuse so angeordnet sind, dass diese zwischen sich wenigstens eine Zwischenkammer bilden, wobei sich die Filteranordnung gemäß der Erfindung dadurch auszeichnet, dass zwischen dem ersten und dem zweiten Filtermedium wenigstens ein Magnet oder eine Magnetanordnung zur Aushaltung von Eisenpartikeln aus dem Ölstrom vorgesehen ist.

Der Erfindungsgedanke kann dahingehend zusammengefasst werden, dass ein oder mehrere Magnete in dem Filtergehäuse derart angeordnet werden, dass diese sich in Bereichen des Filtergehäuses befinden, in denen eine geringere Strömungsgeschwindigkeit und eine geringere Strömungsdynamik vorherrscht, so dass eine durch Wellen, Schwappen oder andere strömungsdynamische Effekte hervorgerufene Abreinigung des oder der Magneten nicht ohne Weiteres möglich ist. Aufgrund dieses Umstandes können der Magnet oder eine Magnetanordnung geringere Haftkräfte oder eine geringere magnetische Feldstärke aufweisen. Entsprechende Magnete benötigen signifikant weniger Bauraum, so dass die gesamte Filteranordnung verhältnismäßig kompakt bauend sein kann.

Bei einer besonders bevorzugten Variante der Filteranordnung gemäß der Erfindung ist vorgesehen, dass der Abstandhalter, mit welchem die Filtrationslagen auf Abstand zueinander gehalten wird, selbst aus einem permanentmagnetischen oder magnetisierbaren Material besteht, so dass separate Magnetkörper nicht vorgesehen sein müssen. Hierdurch wird der Integrationsgrad der erfindungsgemäßen Filteranordnung signifikant erhöht.

Bei einer vorteilhaften Variante der Filteranordnung gemäß der Erfindung ist vorgesehen, dass die in Strömungsrichtung erste Filtrationslage wenigstens einen Strömungsdurchbruch als Filterbypass aufweist und dass der Magnet in einer Strömungstotzone hinter dem Strömungsdurchbruch angeordnet ist. Eine solche Anordnung ist insbesondere bei hoher Viskosität bzw. bei geringer Fluidität von kaltem Öl vorteilhaft. So ist sichergestellt, dass der zähflüssige kalte Ölstrom das dem Magneten anhaftende Material nicht abreinigen kann.

Besonders zweckmäßig ist es, wenn als Abstandhalter wenigstens ein Rahmenelement vorgesehen ist, welches zwischen der ersten und der zweiten Filtrationslage angeordnet ist. Das Rahmenelement kann ganz oder teilweise aus einem permanentmagnetischen oder magnetisierbaren Material bestehen. Beispielsweise kann das Rahmenelement mit Stützkreuzen oder -knoten aus einem permanentmagnetischen Material versehen sein. Alternativ können beispielsweise mehrere einzelne säulen- oder pfostenförmige Abstandhalter aus einem permanentmagnetischen oder magnetisierbaren Material stoff- und/oder formschlüssig mit wenigstens einer Filtrationslage verbunden sein. Alternativ kann vorgesehen sein, dass ein oder mehrere permanentmagnetische oder magnetisierbare Elemente innerhalb eines eine Zwischenkammer definierenden Rahmenelements angeordnet sind.

Zweckmäßigerweise bildet das Rahmenelement mehrere Zwischenkammern, wobei die in Strömungsrichtung erste Filtrationslage einen Strömungsdurchbruch in jede Zwischenkammer aufweist.

Bei einer bevorzugten Variante des Filterelements ist das Rahmenelement vollständig aus einem permanentmagnetischen oder magnetisierbaren Material ausgebildet. Das Rahmenelement kann beispielsweise als Stützgitter ausgebildet sein. Die Strömungsdurchbrüche in der ersten Filtrationslage sind dann zweckmäßigerweise so angeordnet, dass diese etwa mittig bezüglich der Gitterfenster oder Gitterzellen ausgerichtet sind, so dass sich die magnetisierte oder magnetische Gitterstruktur in einer Strömungstotzone, bezogen auf die Durchbrüche, befindet.

Bei einer besonders vorteilhaften Variante des Filterelements gemäß der Erfindung ist vorgesehen, dass das Rahmenelement als kunststoffgebundener Magnet ausgebildet ist. Dieses kann beispielsweise aus einem ferromagnetischen Kunststoff durch Spritzgießen erhalten worden sein.

Der Abstandhalter bzw. das Rahmenelement können formschlüssig mit einer Filtrationslage verbunden sein, beispielsweise kann der Abstandshalter bzw. das Rahmenelement an eine Filtrationslage angespritzt worden sein.

Zweckmäßigerweise ist die in Strömungsrichtung erste Filtrationslage als Filtervlies ausgebildet, wohingegen die zweite Filtrationslage als metallenes Siebfilter ausgebildet ist. Insbesondere ein solches Siebfilter kann ohne Weiteres mit Abstandhaltern, beispielsweise einem Stützgitter, umspritzt werden. Alternativ kann ein vollständig aus Kunststoff ausgebildetes Siebfilter als zweite Filtrationslage vorgesehen sein. Auch an ein solches Siebfilter können Abstandshalter beispielsweise angespritzt sein.

Die der Erfindung zugrundeliegende Aufgabe wird weiterhin gelöst durch eine Filteranordnung zur Filtration von Öl oder einem ATF-Fluid, insbesondere Getriebeölfilter, mit wenigstens einer Filtrationslage, die in einem Filtergehäuse derart angeordnet ist, dass diese sich vorzugsweise von dem gesamten von einem Öleinlass zu einem Ölauslass des Filtergehäuses geführten Ölvolumenstrom durchströmt ist, wobei sich die Filteranordnung dadurch auszeichnet, dass der Filtrationslage in Strömungsrichtung des Öls wenigstens eine Blende mit wenigstens einem Strömungsdurchbruch vorgeschaltet ist, derart, dass diese wenigstens eine Zwischenkammer zwischen der Filtrationslage und der Blende bildet und dass wenigstens an der der ersten Filtrationslage zugekehrten Seite Mittel zur magnetischen Aushaltung von Eisenpartikeln aus dem Ölstrom vorgesehen sind.

Diese Filteranordnung nach einem zweiten Ausführungsbeispiel der Erfindung macht ebenso von dem Prinzip Gebrauch, ein oder mehrere Magnete in dem Filtergehäuse derart anzuordnen, dass diese sich in Bereichen des Filtergehäuses befinden, in denen eine geringere Strömungsgeschwindigkeit und eine geringere Strömungsdynamik vorherrschen, so dass eine durch Wellen, Schwappen oder andere strömungsdynamische Effekte hervorgerufene Abreinigung des oder der Magnete nicht ohne Weiteres möglich ist.

Im Gegensatz zu dem ersten Ausführungsbeispiel gemäß der Erfindung ist bei dem zweiten Ausführungsbeispiel gemäß der Erfindung anstelle der in Strömungsrichtung vorgesehenen ersten Filtrationslage eine Blende in Form einer Lochplatte oder eines Gitters vorgesehen. In der als Lochplatte ausgebildeten Blende sind zweckmäßigerweise mehrere Strömungsdurchbrüche angeordnet, die funktional den Strömungsdurchbrüchen in der ersten Filtrationslage gemäß erstem Ausführungsbeispiel entsprechen. Da die Blende im Übrigen für das angeströmte Öl undurchlässig ist, ist es zweckmäßig, die Strömungsdurchbrüche in der Blende größer zu gestalten, als dies in einer Filtrationslage der Fall wäre.

Die Blende kann zumindest teilweise aus einem permanentmagnetischen oder magnetisierbaren Material bestehen.

Alternativ kann die Blende selbst als Stützgitter für die Filtrationslage ausgebildet sein. Weiterhin alternativ kann vorgesehen sein, dass die Blende als Lochplatte mit Abstandshaltern für die Filtrationslage vorgesehen ist, d. h., dass zwischen der Blende und der Filtrationslage ein Stützgitter oder ein Rahmenelement aus einem magnetisierbaren oder permanentmagnetischen Material vorgesehen ist.

Die Abstandshalter, d. h. beispielsweise ein Stützgitter oder Rahmenelement oder auch einzelne säulenförmige Elemente können wenigstens teilweise aus einem permanentmagnetischen oder magnetisierbaren Material bestehen.

Die Blende und/oder die Abstandshalter können als kunststoffgebundene Magnete ausgebildet sein, wie dies vorstehend im Zusammenhang mit dem ersten Ausführungsbeispiel der Erfindung erläutert wurde.

Die Erfindung wird nachstehend anhand eines in den Zeichnungen dargestellten Ausführungsbeispiels erläutert. Es zeigen:
- Figur 1: einen Querschnitt durch ein Getriebeölfilter gemäß der Erfindung,

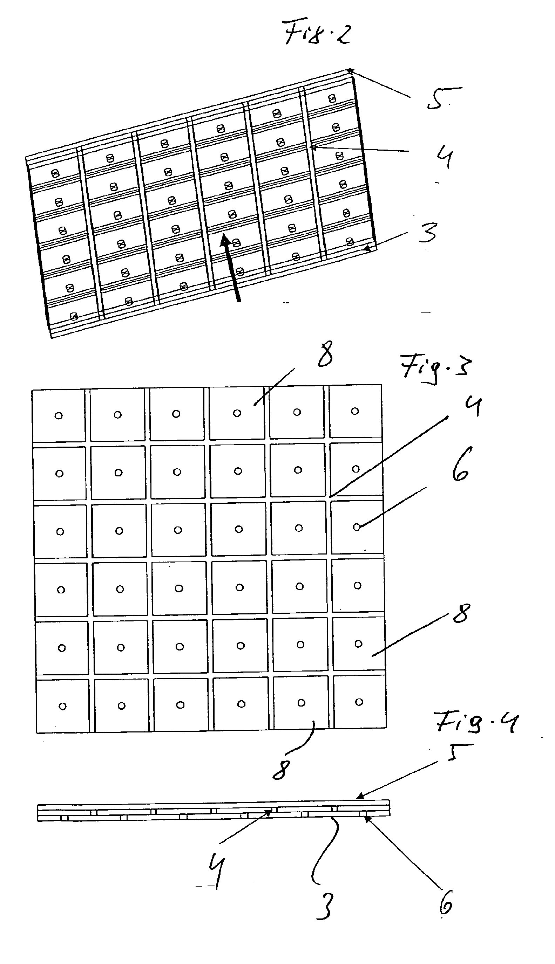

- Figur 2: eine perspektivische Darstellung einer Anordnung der Filtrationslagen gemäß der Erfindung,
- Figur 3: eine Draufsicht auf die Anordnung der Filtrationslagen in Figur 2 und
- Figur 4: einen Querschnitt durch die Anordnung der Filtrationslagen.

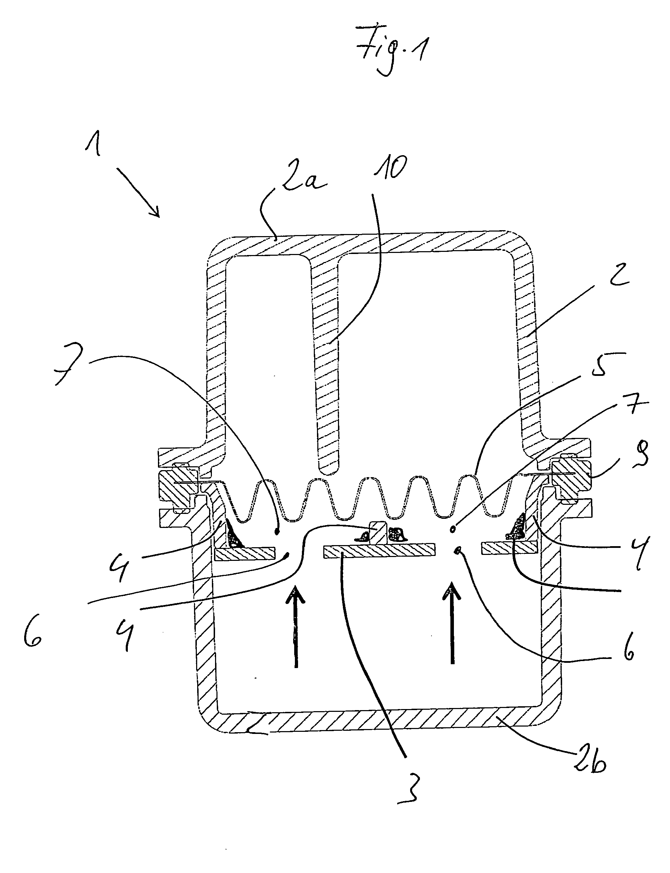

Es wird zunächst Bezug genommen auf Figur 1, die einen Querschnitt durch ein Getriebeölfilter 1 gemäß der Erfindung zeigt. Ein Öleinlauf und ein Ölauslauf sind aus Vereinfachungsgründen nicht dargestellt.

Das Getriebeölfilter 1 umfasst ein zweischaliges Filtergehäuse 2 mit einer Filteroberschale 2a und einer Filterunterschale 2b. In etwa in der Teilungsebene des Filtergehäuses 2 erstreckt sich eine Anordnung aus einer ersten Filtrationslage 3, einem Stützgitter 4 und einer zweiten Filtrationslage 5, die ein Filter-Sandwich bilden.

Die erste Filtrationslage 3 ist die in Strömungsrichtung des Öls oder einer anderen Getriebeflüssigkeit (ATF) diejenige Filtrationslage, die dem Ölstrom zugewandt ist, bzw. die stromaufwärtige. Die zweite Filtrationslage 5 ist diejenige Filtrationslage, durch die das Fluid austritt.

Die erste Filtrationslage 3 kann beispielsweise als Filtervlies als Feinstfiltrationsmedium ausgebildet sein. Die zweite Filtrationslage 5 kann entweder als gefalteter oder planarer Gewebefilter, bzw. auch als metallenes Siebgitter ausgebildet sein.

Ein Öleinlauf bzw. Fluideinlass ist in der Filterunterschale 2b vorgesehen, derart, dass der gesamte Ölstrom, wie dies in Figur 1 durch die Pfeile angedeutet ist, von Seiten der ersten Filtrationslage 3 die Filteranordnung durchströmt. Ein Fluidauslass ist demgemäß in der Filteroberschale 2a vorgesehen.

Wie eingangs bereits erwähnt wurde, ist das Getriebeölfilter 1 gemäß der Erfindung nach dem "partial flow"-Prinzip ausgelegt. Hierzu sind in der ersten Filtrationslage 3 eine Vielzahl von Strömungsdurchbrüchen 6 vorgesehen, die als kreisrunde Bohrungen mit einem Durchmesser von zwischen 0,1 bis 3 mm ausgeführt sind. Über das in Strömungsrichtung hinter der ersten Filtrationslage 3 angeordnete Stützgitter 4, welches eine Zwischenkammer 7 bzw. eine Vielzahl von Zwischenkammern 7 definiert, ist die gesamte Filterfläche in eine Vielzahl von Feldern 8 aufgeteilt, in denen die Strömungsdurchbrüche 6 jeweils mittig angeordnet sind.

Das Stützgitter 4 und die zweite Filtrationslage 5 sind randseitig mit einer gemeinsamen Einfassung 9 versehen, die zwischen der Filteroberschale 2a und der Filterunterschale 2b randseitig eingespannt ist.

Wie bereits vorstehend erwähnt, ist das gesamte Stützgitter 4 als kunststoffgebundener Magnet ausgebildet, d. h. dass dieses aus einem thermoplastischen Material mit in dieses als Matrix eingebetteten permanentmagnetischen Partikeln besteht.

Die Funktionsweise des Getriebeölfilters 1 gemäß der Erfindung ist wie folgt:

Bei niedriger Viskosität des Fluids bzw. bei niedriger Ölviskosität wird durch die erste Filtrationslage 3, die als offenes Filtermedium ausgebildet wird, der Strömungsdruck nahezu ohne Verlust direkt in die Zwischenkammern 7 übertragen. Der Druck in den Zwischenkammern 7 wird bestimmt durch den Treibstrahl des durch die Strömungsdurchbrüche 6 verursachten Staudrucks. Der Staudruck bestimmt in dem Zustand maßgeblich den Unterdruck in der Zwischenkammer 7. Je kleiner das Loch, desto größer der Staudruck und desto höher der Unterdruck in der Zwischenkammer 7. Dieser Unterdruck in der Zwischenkammer 7 sorgt dafür, dass der entsprechende Anteil des Fluidums durch das dichtere Filtermedium der ersten Filtrationslage 3 strömt.

In hochviskosem Zustand des Fluidums bzw. des Öls wird durch die erste Filtrationslage 3 der Druck mit geringerem Verlust in die Zwischenkammer 7 übertragen. Der Druck in der Zwischenkammer 7 wird bestimmt durch den Treibstrahl aus dem Strömungsdurchbruch 5 und den Druckverlust in der Kammer. Der Durchmesser des Strömungsdurchbruchs 6 bestimmt maßgeblich den Unterdruck in der Zwischenkammer 7. Je kleiner der Strömungsdurchbruch 6 und je flacher die Zwischenkammer 7 ist, desto höher ist der Gesamtdruckverlust des Filters. In diesem Zustand wird die als dichteres Filtermedium ausgebildete erste Filtrationslage 3 nahezu vollständig umgangen.

Ungeachtet des Viskositätszustands des Fluidums stellt sich über den Querschnitt des Treibstrahls durch den Strömungsdurchbruch ein Geschwindigkeitsprofil ein, welches dadurch gekennzeichnet ist, dass randseitig des Treibstrahls und im Bereich der Einfassung des Stützgitters eine verhältnismäßig geringe Strömungsgeschwindigkeit, jedoch mittig in dem Strömungsdurchbruch 6 eine verhältnismäßig hohe Strömungsgeschwindigkeit vorherrscht, so dass im Ergebnis das Stützgitter 4 durch die mittige Anordnung der Strömungsdurchbrüche 6 in den Feldern 7 in Bezug auf den durch die Strömungsdurchbrüche 6 hindurchtretenden Treibstrahl in einer Strömungstotzone angeordnet ist. In diesem Bereich findet eine Anlagerung von in dem Fluid transportierten schwereren Partikeln statt. Zu solchen schweren Partikeln gehören beispielsweise metallene Partikel, die dort dem magnetischen Stützgitter 4 anhaften können.

Daraus ergeben sich folgende Vorzüge. Es ist kein zusätzlicher Bauraum für Magnete notwendig, vielmehr wird der von dem Stützgitter 4 beanspruchte Bauraum optimal genutzt. Durch die Strömungsbedingungen zwischen den Filtrationslagen 3 und 5 ergibt sich eine optimale Ansammlung von Partikeln an den Rändern des Stützgitters 4. Es werden kleinere ferromagnetische Partikel im Feinfiltermedium gehalten, die sonst nicht gehalten würden.

Bei höheren Viskositäten werden die Partikel an den Rändern nicht losgerissen, da das Feinfiltermedium umgangen wird und dort fast keine Strömungsgeschwindigkeit vorherrscht.

Darüber hinaus ergibt sich eine starke Unabhängigkeit von dynamischen Effekten der Getriebeflüssigkeit, beispielsweise durch Wellen und Schwappen. Dies ergibt sich dadurch auch, dass die Filteroberschale 2a in Einbaulage des Getriebeölfilters 1 oben angeordnet ist und die Filterunterschale 2b in Einbaulage des Getriebeölfilters 1 unten angeordnet ist, etwaige Schwappbewegungen allerdings in Einbaulage unten stattfinden.

Es sind keine zusätzlichen Bauteile erforderlich. Da keine zusätzlichen Magnete erforderlich sind, ist das Gewicht des Getriebeölfilters 1 gemäß der Erfindung deutlich reduziert. Ein zusätzlicher Montageaufwand entfällt. Nicht zusätzlich angebrachte und/oder vorgesehene Magnete können beim Transport nicht beschädigt werden. Handelsübliche Permanentmagnete sind gepresst oder gesintert und entsprechend bruchempfindlich.

Mit 10 sind Stützrippen in der Filteroberschale 2a bezeichnet, welche eine Auslenkung der ersten Filtrationslage 3 verhindern.

Die Erfindung wurde vorstehend unter Bezugnahme auf ein Ausführungsbeispiel erläutert, bei welchem die Filteranordnung zwei mit Abstand zueinander angeordnete Filtrationslagen 3, 5 aufweist, wobei die in Strömungsrichtung erste Filtrationslage 3 ein relativ offenes Filtermedium umfasst und die in Strömungsrichtung zweite Filtrationslage 5 ein in Bezug auf die erste Filtrationslage 3 dichteres und feineres Filtermedium umfasst.

Wie eingangs bereits beschrieben, kann anstelle der in Strömungsrichtung ersten Filtrationslage 3 auch eine Lochplatte mit Strömungsdurchbrüchen als Blende vorgesehen sein, wobei eine Zwischenkammer zwischen der Lochplatte und der zweiten Filtrationslage gebildet wird. Im Übrigen kann die Lochplatte geometrisch in etwa der ersten Filtrationslage 3 entsprechen, wobei die Strömungsdurchbrüche in der Lochplatte größer sind, als die Strömungsdurchbrüche in der ersten Filtrationslage. Im Übrigen kann zwischen der Lochplatte und der zweiten Filtrationslage ein Stützgitter angeordnet sein, das in seiner Beschaffenheit dem Stützgitter gemäß dem vorstehend beschriebenen Ausführungsbeispiel entspricht. Es ist für den Fachmann erkennbar, dass auch das zweite Ausführungsbeispiel vom Prinzip der Erfindung und deren Vorteil Gebrauch macht.

### Bezugszeichenliste

- 1: Getriebeölfilter
- 2: Filtergehäuse
- 2a: Filteroberschale
- 2b: Filterunterschale
- 3: erste Filtrationslage
- 4: Stützgitter
- 5: zweite Filtrationslage
- 6: Strömungsdurchbrüche
- 7: Zwischenkammern
- 8: Felder
- 9: Einfassung
- 10: Stützrippen

## Patentansprüche

1. Filteranordnung zur Filtration von Öl oder einem ATF-Fluid, insbesondere Getriebeölfilter, umfassend wenigstens eine erste und eine zweite Filtrationslage (3, 5), die mittels wenigstens eines Abstandhalters auf Abstand zueinander in einem Filtergehäuse (2) so angeordnet sind, dass diese zwischen sich wenigstens eine Zwischenkammer (7) bilden, **dadurch gekennzeichnet, dass** zwischen der ersten und der zweiten Filtrationslage (3, 5) wenigstens ein Magnet oder eine Magnetanordnung zur Aushaltung von Eisenpartikeln aus dem Ölstrom vorgesehen sind.

2. Filteranordnung nach Anspruch 1, **dadurch gekennzeichnet, dass** der Abstandhalter zumindest teilweise aus einem permanentmagnetischen oder magnetisierbaren Material besteht.

3. Filteranordnung nach einem der Ansprüche 1 oder 2, **dadurch gekennzeichnet, dass** die in Strömungsrichtung erste Filtrationslage (3) wenigstens einen Strömungsdurchbruch (6) als Filterbypass aufweist, und dass der Magnet in einer Strömungstotzone hinter dem Strömungsdurchbruch (6) angeordnet ist.

4. Filteranordnung nach einem der Ansprüche 1 bis 3, **dadurch gekennzeichnet, dass** als Abstandhalter wenigstens ein Rahmenelement vorgesehen ist, welches zwischen der ersten und der zweiten Filtrationslage (3, 5) angeordnet ist.

5. Filteranordnung nach Anspruch 4, **dadurch gekennzeichnet, dass** das Rahmenelement mehrere Zwischenkammern (7) bildet, und dass die in Strömungsrichtung erste Filtrationslage (3) einen Strömungsdurchbruch (6) in jede Zwischenkammer (7) aufweist.

6. Filteranordnung nach Anspruch 5, **dadurch gekennzeichnet, dass** das Rahmenelement vorzugsweise vollständig aus einem permanentmagnetischen oder einem magnetisierbaren Material besteht.

7. Filteranordnung nach einem der Ansprüche 5 oder 6, **dadurch gekennzeichnet, dass** das Rahmenelement als Stützgitter (4) ausgebildet ist.

8. Filteranordnung nach einem der Ansprüche 5 bis 7, **dadurch gekennzeichnet, dass** das Rahmenelement als kunststoffgebundener Magnet ausgebildet ist.

9. Filteranordnung nach einem der Ansprüche 1 bis 8, **dadurch gekennzeichnet, dass** der Abstandhalter formschlüssig mit einer Filtrationslage (3, 5) verbunden ist.

10. Filteranordnung nach einem der Ansprüche 1 bis 9, **dadurch gekennzeichnet, dass** wenigstens ein Abstandhalter als kunststoffgebundener Magnet ausgebildet ist, der an eine Filtrationslage (3, 5) angespritzt ist.

11. Filteranordnung zur Filtration von Öl oder einem ATF-Fluid, insbesondere Getriebeölfilter, mit wenigstens einer Filtrationslage, die in einem Filtergehäuse derart angeordnet ist, dass diese vorzugsweise von dem gesamten von einem Öleinlass zu einem Ölauslass des Filtergehäuses geführten Ölvolumenstrom durchströmt ist, **dadurch gekennzeichnet, dass** der Filtrationslage in Strömungsrichtung des Öls wenigstens eine Blende mit wenigstens einem Strömungsdurchbruch vorgeschaltet ist, derart, dass dieser wenigstens eine Zwischenkammer zwischen der Filtrationslage und der Blende bildet und dass wenigstens an der der Filtrationslage zugekehrten Seite der Blende Mittel zur magnetischen Aushaltung von Eisenpartikeln aus dem Ölstrom vorgesehen sind.

12. Filteranordnung nach Anspruch 11, **dadurch gekennzeichnet, dass** die Blende zumindest teilweise aus einem permanentmagnetischen oder magnetisierbaren Material besteht.

13. Filteranordnung nach einem der Ansprüche 11 oder 12, **dadurch gekennzeichnet, dass** die Blende als Stützgitter für die Filtrationslage ausgebildet ist.

14. Filteranordnung nach einem der Ansprüche 11 oder 12, **dadurch gekennzeichnet, dass** die Blende mit Abstandshaltern für die Filtrationslage vorgesehen ist.

15. Filteranordnung nach Anspruch 14, **dadurch gekennzeichnet, dass** die Abstandshalter wenigstens teilweise aus einem permanentmagnetischen oder magnetisierbaren Material bestehen.

16. Filteranordnung nach einem der Ansprüche 11 bis 15, **dadurch gekennzeichnet, dass** die Blende und/oder die Abstandshalter zumindest teilweise als kunststoffgebundene Magnete ausgebildet sind.
